(19) Europäisches Patentamt
European Patent Office
Office européen des brevets

(11) **EP 3 495 654 A1**

(12) **EUROPEAN PATENT APPLICATION**

(43) Date of publication:
**12.06.2019 Bulletin 2019/24**

(51) Int Cl.:
***F03B 3/04*** (2006.01)  ***F03B 3/18*** (2006.01)
***F03B 13/26*** (2006.01)  ***F03B 17/06*** (2006.01)

(21) Application number: **17205660.8**

(22) Date of filing: **06.12.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **Technische Universität München 80333 München (DE)**

(72) Inventors:
• **Schechtl, Tobias**
  **80339 München (DE)**
• **Knapp, Wilfried**
  **82327 Tutzing (DE)**
• **Hötzl, Stephan**
  **85560 Ebersberg (DE)**

(74) Representative: **Kretschmann, Dennis Boehmert & Boehmert Anwaltspartnerschaft mbB Pettenkoferstrasse 22 80336 München (DE)**

(54) **GUIDE VANE FOR AN AXIAL KAPLAN TURBINE**

(57) An inlet for an axial turbine comprises a hub and a plurality of rotatable guide vanes arranged circumferentially around the hub, the guide vanes each comprising an inner contour continuously connected by a vane surface to an outer contour in a radial direction from the hub, wherein the outer contour is farther from the hub than the inner contour, wherein the inner contour comprises an inner camber line with an inner curvature and the outer contour comprises an outer camber line with an outer curvature, the outer curvature being smaller than the inner curvature at least in a central portion of the outer contour, and wherein the outer contour is twisted with respect to the inner contour to allow a closing of the inlet when the guide vanes are rotated.

Fig. 4B

## Description

### Field of the invention

The present invention relates to guide vanes of axial turbines, in particular turbines for harvesting tidal power.

### Background

The departure from combustible energy sources for the generation of electrical power necessitates optimally exploiting renewable energy sources. One such energy source is the kinetic and potential energy of water, in particular tidal energy. Due to the gravitational pull of the moon and the sun onto the water of the earth, the precession of the earth around its own axis causes a cyclic variation of the surface elevation of the ocean with a period of roughly 12 hours. The work stored in the increased water level at high tide can be harvested by forcing a stored amount of water through a turbine, when the water level has again decreased at low tide.

Additionally, mechanical work can be harvested from the rise of the tide when the flow of the ocean water into a water reservoir is used to drive a turbine in the opposite direction. However, the efficiencies of turbines driven in opposite directions usually constitute a compromise between the two flow directions and are generally lower than for water turbines harvesting energy in only one flow direction.

Recently, the patent application WO2017153540 A1 proposed a system with a rotatable water turbine to harvest energy from a tidal wave in an inflow as well as an outflow direction of a reservoir with improved efficiency. The rotatable water turbine further allows increasing the efficiency for pumping water in both directions to increase the overall power output of a tidal power plant with the turbine.

However, for implementing a rotatable water turbine, an axial turbine having an axial extension as small as possible is required in order to limit the dimensions of the turning cylinder. Furthermore, the in- and outlet sections need to be symmetrical, as their functions are interchanged when the turbine is reversed. As the opening angle in the turbine outlet section must be kept very small to avoid flow separation, this leads to an inlet section with a very small contraction ratio and a nearly axial wicket gate. This makes it difficult to obtain an optimal distribution of the circumferential velocity component in the runner inlet flow: An optimum distribution given by a constant swirl ratio $r \ast c_u$ can only be produced by using twisted guide vanes. Such guide vanes, however, are not capable of shutting off the flow in the closed position and do thus not permit to stop the turbine.

In a vertical Kaplan turbine, the radial inflow can provide a flow velocity distribution that is suitable for high efficiency energy harvesting due to the conservation of angular momentum of the water from the inflow. As shown in US 6,007,297, the flow velocity distribution may be further adjusted by changing the length of curved guide vanes and by adjusting the shape of the curved flow path, which connects a runner of the turbine to the guide vanes and further modifies the flow velocity distribution.

In an axial turbine, as proposed in Sedlacek et al. (Hydropower & Dams, Issue Three 2017), the flow velocity distribution for the runner has to be produced from the straight axial inflow by a wicket gate with specially shaped guide vanes. Due to their shape, these guide vanes cannot shut off the flow in their closed position, thus an additional shutter is required to be able to stop the turbine and to control its speed while synchronizing it with the grid during startup.

The additional shutter entails increased system complexity, significant additional investment and maintenance cost and it increases the building dimensions due to its spatial footprint. Furthermore, using a shutter to control the idling speed of the turbine leads to an unstable flow regime posing a problem for the synchronization operation and causing severe fluctuating forces with ensuing material fatigue.

### Overview of the invention

The invention relates to an inlet for an axial turbine and a method for constructing a guide vane according to the independent claims. The dependent claims relate to preferred embodiments.

In a first aspect, the invention relates to an inlet for an axial turbine comprising a hub and a plurality of rotatable guide vanes arranged circumferentially around the hub, the guide vanes each comprising an inner contour continuously connected by a vane surface to an outer contour in a radial direction from the hub, wherein the outer contour is farther from the hub than the inner contour, wherein the inner contour comprises an inner camber line with an inner curvature and the outer contour comprises an outer camber line with an outer curvature, the outer curvature being smaller than the inner curvature at least in a central portion of the outer contour, and wherein the outer contour is twisted with respect to the inner contour to allow a closing of the inlet when the guide vanes are rotated.

The inlet may prepare a flow velocity distribution for an axial turbine runner and may allow shutting down a flow through the axial turbine by rotating the guide vanes, without the need to use a shutter.

The invention proposes a method to design guide vanes which may produce an optimum swirl distribution, while still being able to shut off the flow to stop the turbine and to control its speed in the synchronization process.

The guide vanes may protrude in a vane direction from the hub, which may be a radial direction with respect to the hub. However, the vane direction may be considered to be a mostly radial direction and can have a finite axial component. In some embodiments, the guide vanes may therefore protrude slightly in an axial direction of the inlet. In some embodiments, the angle between the vane direction and the axial direction is substantially 90° or deviates from substantially 90° by less than 30°, in particular by less than 10°, and preferably by less than 5°.

The guide vanes may be rotatable around any direction or axis as long as the direction is suitable for allowing a closing of the inlet by rotating the guide vanes. In particular, the guide vanes may be rotated around a central axis of the guide vanes, which may correspond to the vane direction. The guide vanes may, in an example, be rotated about a radial direction or substantially radial direction, as detailed above.

The inner and outer contours are contours of the guide vane, wherein a surface spanned by the contours may have a normal direction that is mostly parallel to the vane direction. The contours may define the shape of the guide vane and thereby modify the flow through the inlet.

A camber line or skeleton line of a contour (such as the inner or the outer contour) may be used to describe the shape and/or curvature of the guide vane. To define the camber line (such as the inner or the outer camber line) of the contour, the contour may have two points at opposite sides of the contour where a curvature of the contour may be maximal. The points of maximal curvature may be end points of the camber line of the contour. The camber line may connect the points of maximal curvature of the contour and may be defined by being arranged to have an equal spacing to opposite sides of the contour. The equal spacing may be defined with respect to a constant direction or may be defined by a normal direction, which is normal to a tangent to the camber line at the respective point from which the equal distance is determined.

In other words, the contour may be defined by a camber line connecting end points of the contour and a thickness profile of the contour along the camber line. Then the contour may be constructed by determining the location of oppositely located points of the contour with respect to the camber line. The oppositely located points may be spaced from the camber line according to the thickness profile in a normal direction with respect to a tangent to the camber line or in a constant direction. The end points may be points of maximal curvature of the contour located at opposite sides of the contour.

The camber line may have a curvature. The curvature may be constant or may vary along the camber line. The curvature of the camber line may be defined with respect to a flow direction through the vane or the runner, or may be defined with respect to the vane direction. The curvature of the camber line may affect the shape of the contour and hence may affect the shape of the guide vane. In particular, the curvature of the camber line may affect a difference between an intake angle and an exit angle of the guide vane.

The intake or exit angle of the contour may be defined as an angle between the axial direction and the leading or trailing edge camber tangent to the camber line, respectively. The leading or trailing edge camber tangent may be a tangent to the camber line at the leading or trailing edge of the guide vane, respectively. The leading and trailing edges of the guide vane may be defined with respect to a flow direction through the inlet and may be located at opposite points of maximum curvature of the respective contour.

Preferably, the leading edge camber tangent of the guide vane may be aligned parallel or substantially parallel to a flow direction or the axial direction in an open position of the inlet, such that an intake angle of the guide vane may be below 5°, in particular zero. A parallel alignment of the leading edge camber tangent with respect to the flow direction may reduce the occurrence of swirls, turbulence and/or cavitation of a flow in the inlet and may reduce an energy loss of the flow in the inlet. In some embodiments, the intake angle of the inner contour and the outer contour may differ and hence, an intake angle may vary or be constant along a radial direction of the guide vane.

The exit angle of the guide vane may affect the tangential velocity component of a flow downstream of the guide vane, wherein the tangential component may be aligned in the direction of rotation of a runner. The tangential velocity component may affect the power extracted by the runner in the axial turbine. The extracted power at a specific radial position may be proportional to a torque, which may be proportional to a product of the difference of the tangential velocity component upstream and downstream of the runner and the radius of said radial position.

Preferably, the specific work of the flow onto the runner is mostly constant or varies weakly along a radial direction of the runner to reduce the occurrence of swirls and undesired cross flows. Hence, the efficiency of the axial turbine may be increased, if the tangential velocity component of the flow downstream of the inlet is reduced with increasing radius of the runner.

Accordingly, the curvature of the inner camber line and the outer camber line may be different, such that the curvature of the inner camber line is greater than the curvature of the outer camber line to affect the tangential velocity component of the flow downstream of the inlet.

The curvature of the inner camber line may be larger than the curvature of the outer camber line and/or may be different in at least a portion of the guide vane to affect the difference between the exit and the intake angle, such as in a central portion of the inner and outer camber lines.

In a preferred embodiment, an inner exit angle of the inner contour is larger than an outer exit angle of the outer contour.

An exit angle may define the direction of the flow and the respective velocity components downstream of the inlet and upstream of the runner. Hence, the tangential velocity component of the flow downstream of the inlet may be modified by the exit angle, such that the efficiency of the turbine may be increased.

If the curvature of the inner camber line and the outer camber line is different, the guide vanes may not permit a closing of the inlet of an axial turbine merely by rotating the guide vanes. Twisting the outer contour with respect to the inner contour may allow a closing of the inlet when the guide vanes are rotated. Twisting the outer contour may refer to a rotated position of the outer contour around an axis defined by a twist axis of the guide vane, which is preferably intersecting the inner contour and the outer contour of the guide vane, such as the vane direction.

In some embodiments, the outer contour may be twisted such that a difference between the outer exit angle and the inner exit angle is reduced and/or such that the inlet may be closed by rotating the guide vanes.

In some embodiments, the outer contour may be twisted such that the leading edge camber tangent of the outer contour is not parallel to the leading edge camber tangent of the inner contour.

Due to the twisted outer contour, the inlet may be closed, when the guide vanes are rotated. Adjacent guide vanes may touch along a touching line in a closed position of the inlet. Further from the central portion of the guide vane and past the touching line, the contour of the guide vane may be adjusted to improve an intake condition of the guide vane.

In some embodiments, a leading edge camber tangent of the inner contour and a leading edge camber tangent of the outer contour are parallel at an intake side of the inlet.

With reference to the leading edge camber tangent, parallel may mean parallel within a common fabrication and/or motor control margin and/or parallel within a margin given by the occurrence of swirls and/or turbulence in the flow at the intake side of the guide vane outside the margin. The margin for an occurrence of swirls and/or turbulence may be related to a curvature or a change of a curvature at the intake side of the turbine. Accordingly, parallel may mean parallel within a margin such as 10°, 5°, 3° or 1°, which may depend on the occurrence of swirls and/or turbulence and/or a shape of the intake side of the guide vane, in particular a curvature of the guide vane at the intake side.

In some embodiments, the curvature and/or the thickness profile of the outer camber line and/or the inner camber line changes further from the central portion of the inner contour and/or the outer contour and past the touching line, respectively, such that the leading edge camber tangent of the inner contour is substantially parallel to the leading edge camber tangent of the outer contour.

In some embodiments, the curvature and/or the thickness profile of the outer camber line and/or the inner camber line changes further from the central portion of the inner contour and/or the outer contour and past the touching line, respectively, such that the inner exit angle is increased with respect to the outer exit angle.

The presence of an additional shutter in an inlet may be detrimental for an optimal flow profile. By closing the inlet through rotating the guide vanes, the turbine may be free from a shutter. In addition, a closable guide vane assembly may provide an improved flow profile at a partially opened state of the guide vane assembly for starting the turbine and may reduce the time to establish an optimal flow condition in the turbine. The total harvested energy from a given tidal range may hence be increased.

In some embodiments, the outer curvature may be smaller than the inner curvature over the full length of the outer camber line and the inner camber line.

In some embodiments, the inner contour and/or the outer contour is symmetric with respect to a flow through the inlet.

A symmetric contour with respect to a flow through the inlet may relate to a contour having mirror symmetry with respect to a mirror plane defined by a plane perpendicular to the camber line at a middle position of the contour, or may relate to a substantially symmetric contour, such as a contour differing from a fully symmetric contour by an adjustment of the nose or the trailing edge of the contour.

The symmetric contour of the guide vane may increase the efficiency of a pumping mode of the axial turbine. In particular, for an axial turbine harvesting energy from a tidal wave, a surplus of energy at an apex of the tidal wave may be used to increase an exploitable head and may hence be used to increase the overall power output of the tidal power plant.

In some embodiments, the inner contour and/or the outer contour is non-symmetric with respect to a flow through the inlet.

A non-symmetric contour, such as a non-symmetric NACA hydrofoil, may produce an advantageous flow profile in and/or downstream of the inlet and may increase the efficiency of the turbine and/or may reduce the effect of erosion onto the guide vane.

In a further aspect, the invention relates to a turbine comprising the inlet as described above, in particular an axial Kaplan turbine.

In some embodiments, an intake diameter of the turbine is equal to an exit diameter of the turbine.

In some embodiments, the turbine is arranged to be rotatable about an axis perpendicular to an axial direction of the turbine.

In a further aspect, the invention relates to a method for constructing a guide vane for an inlet of an axial turbine comprising obtaining an inner contour, scaling the inner contour in a radial direction of the turbine to obtain an outer contour with an outer camber line, adjusting a curvature of the outer camber line and/or the inner camber line, such that the curvature of the outer camber line is smaller than the curvature of the inner camber line, rotating the outer contour around the radial direction, and (continuously) connecting the inner contour with the outer contour by a vane surface.

Adjusting a curvature of the outer camber line and/or the inner camber line, such that the curvature of the outer camber line is smaller than the curvature of the inner camber line, may comprise reducing a curvature of the outer camber line and/or increasing a curvature of an inner camber line of the inner contour.

In some embodiments, the method also comprises adjusting a thickness profile of the inner contour and/or the outer contour with respect to the inner camber line and/or the outer camber line, respectively.

In some embodiments, the inner contour is symmetric with respect to a flow through the inlet.

In some embodiments, the inner contour is non-symmetric with respect to a flow through the inlet.

In some embodiments, the method further comprises adjusting a nose of the outer contour such that a leading edge camber tangent of the outer contour is parallel to a leading edge camber tangent of the inner contour, or vice versa.

In other words, the method may also comprise adjusting the nose of the inner contour such that a leading edge camber tangent of the inner contour is substantially parallel to a leading edge camber tangent of the outer contour.

In some embodiments, an inner exit angle of the inner contour is larger than an outer exit angle of the outer contour.

In some embodiments, the guide vane connects with an adjacent guide vane in the inlet when the guide vane and the adjacent guide vane are each rotated around a substantially radial axis allowing for stopping a flow through the turbine.

In some embodiments, the method may construct a guide vane defining and/or used in an inlet according to the embodiments described above.

## Detailed description of embodiments

The features and numerous advantages of the inlet and method according to the present invention will best be understood from a detailed description of preferred embodiments with reference to the accompanying drawings, in which:

Fig. 1 is a schematic illustration of a turbine;

Fig. 2A illustrates a construction profile of an inner and an outer contour of a guide vane according to a comparative example without twist;

Fig. 2B illustrates an inlet of an axial turbine with non-twisted guide vanes in a maximally closed position and constructed from the contours of Fig. 2A according to a comparative example;

Fig. 3 shows exemplary values of the product of the tangential flow velocity and the runner velocity as a function of the radial position for different exemplary guide vane designs;

Fig. 4A illustrates a construction profile of an inner and an outer contour of a guide vane according to an example with twist;

Fig. 4B illustrates an inlet of an axial turbine according to an example with twisted guide vanes in a closed position and constructed from the contours of Fig. 4A;

Fig. 5 shows a flow diagram of a method to construct a guide vane according to an example;

Fig. 6 illustrates a construction profile of an inner and an outer contour of a guide vane according to an example with an adjusted intake portion of the guide vane;

Fig. 7 illustrates a guide vane with a certain non-symmetric NACA hydrofoil according to an example; and

Fig. 8 is a schematic illustration of a tidal power plant with a turbine according to an example.

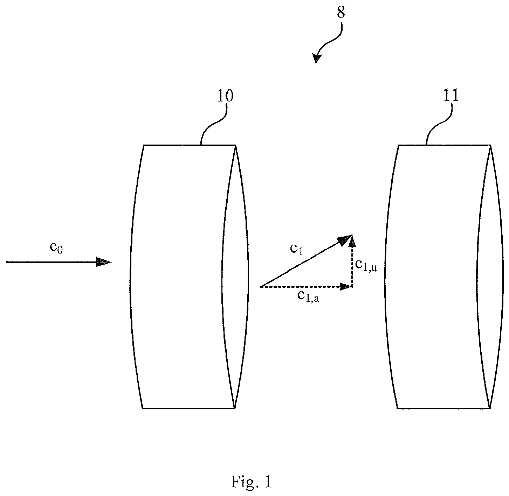

In the example of Fig. 1, an axial turbine 8 is shown with an ingoing flow velocity $c_0$ entering the inlet 10 and used to drive a runner 11. The flow may be a flow of a non-compressible medium such as a liquid (e.g. water). The inlet 10 may have a cylindrical or conical shape with a circular cross-section. The direction of the ingoing flow velocity $c_0$ may be aligned with an axial direction of the inlet 10. The inlet 10 may act on the ingoing flow velocity $c_0$ such that the outgoing flow velocity $c_1$ downstream of the inlet 10 comprises a tangential (flow) velocity component $c_{1,u}$ and an axial (flow) velocity component $c_{1,a}$, the axial flow velocity component $c_{1,a}$ being parallel to an axial direction of the turbine 8 and the tangential flow velocity component $c_{1,u}$ being perpendicular to the axial direction and the radial direction of the inlet 10.

The outgoing flow with velocity $c_1$ may enter the runner 11 of the turbine 8. The difference of the tangential flow velocity component $c_{1,u}$ upstream and downstream of the runner 11 may induce a torque onto the runner 11 and hence induce an angular momentum onto the runner 11. The torque may thereby lead to a rotation of the runner 11. The runner 11 may be a Kaplan turbine runner, comprising runner blades arranged circumferentially around a hub, the hub being rotatable and connected to a generator. An angular momentum of the runner 11 may be transferred to a rotatable portion of the generator and may be used to extract energy from the flow through the turbine 8.

The angular momentum transferred from the flow onto the runner 11 may depend on the change of the angular momentum in the flow, which may be proportional to

$$\Delta c_u * r = \left(c_{2,u} - c_{1,u}\right) * r; \qquad (1)$$

wherein $\Delta c_u$ is the change of the tangential flow velocity component across the runner 11, $r$ is the radius of the runner 11 at which the tangential flow velocity component $c_u$ is determined, $c_{1,u}$ is the tangential flow velocity component before entering the runner 11 and $c_{2,u}$ is the tangential flow velocity component after exiting the runner 11.

Preferably, the change of the angular momentum in the flow is constant along the radial direction of the runner blade to reduce undesired cross flows and/or swirls and/or turbulence in the flow, which may lead to a reduction of the efficiency of the turbine 8.

The change of the angular momentum along the radial direction of the runner 11 may be influenced by the radial distribution of the tangential flow velocity component $c_{1,u}$ before the flow enters the runner 11. Preferably, the tangential flow velocity component $c_{1,u}$ is larger at a radial position close to the hub of the runner 11 and decreases along the radial direction of the runner 11.

To increase the efficiency of the turbine 8, the ratio of the tangential flow velocity component $c_{1,u}$ and the axial flow velocity component $c_{1,a}$ may be varied along a radial direction of the turbine 8 before the flow enters the runner 11 by the inlet 10.

To change the direction of the ingoing flow $c_0$, the inlet 10 may comprise guide vanes 12, which guide the flow in the inlet 10. The guide vanes 12 may be blades extending radially from the hub 22 of the inlet 10 and may be arranged circumferentially around the hub 22 of the inlet 10. The curvature of the guide vane 12 may change the direction of the flow and transform an ingoing axial flow velocity $c_0$ into an outgoing flow $c_1$ with a tangential flow velocity component $c_{1,u}$ that may depend on the curvature of the guide vane 12. The guide vane 12 may be constructed from two guide vane contours 14i, 14o which may be continuously connected by a vane surface.

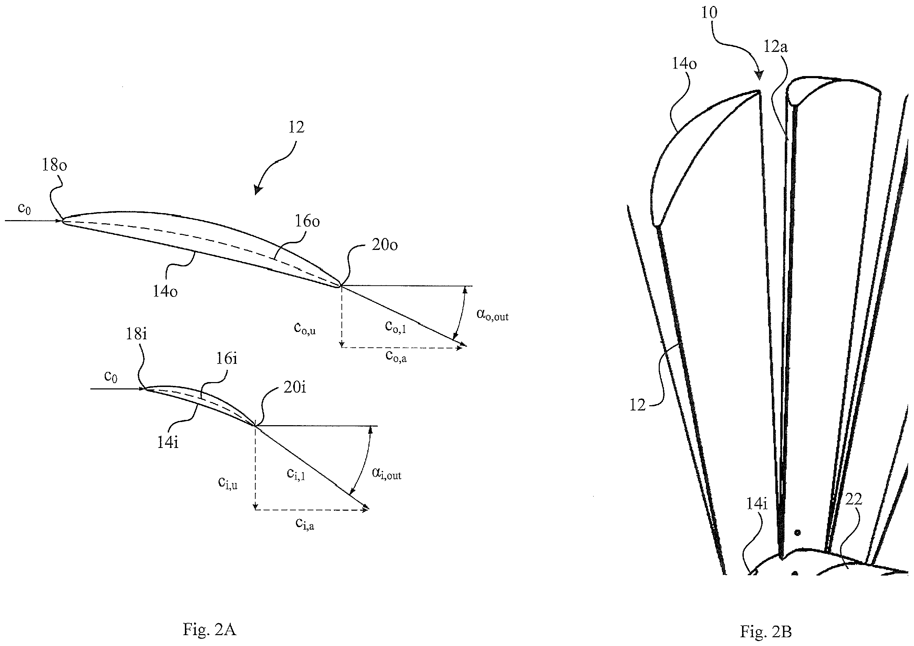

An example of an inner contour 14i and an outer contour 14o for constructing a guide vane 12 is shown in Fig. 2A. An inlet 10 constructed from the contours 14i, 14o shown in Fig. 2A is illustrated in Fig. 2B. The inner contour 14i may be a contour of the guide vane 12 at or close to the hub 22 of the inlet 10, and the outer contour 14o may be a contour of the guide vane 12 at a radially outward position from the hub 22 of the inlet 10, such as a position at or close to the shroud of the inlet 10.

The inner contour 14i comprises an inner camber line 16i and the outer contour 14o comprises an outer camber line 16o. The camber lines 16i and 16o may connect the leading edges 18i and 18o of the guide vane 12 to the trailing edges 20i and 20o of the guide vane 12, respectively, and may be equally spaced from either side of the contours 14i and 14o, respectively, by a distance given by a thickness profile.

A curvature of the guide vane 12 at a certain radial position may be given by a curvature of the camber lines 16i, 16o. In Fig. 2A, the curvature of the inner camber line 16i is larger than the curvature of the outer camber line 16o.

An outgoing flow $c_1$ may be parallel to the trailing edge camber tangent of the contours 14i, 14o. Hence, if a leading edge camber tangent is arranged to be parallel to the ingoing flow $c_0$, downstream of the inlet 10 the inner tangential flow velocity component $c_{i,u}$ may be larger than the outer tangential flow velocity component $c_{o,u}$ due to the difference of the curvature of the inner contour 14i and the outer contour 14o.

Generally, the ratio of the tangential flow velocity component $c_u$ to the axial flow velocity component $c_a$ may be determined from the exit angles $\alpha_{o,out}$, $\alpha_{i,out}$ of the guide vane 12. The exit angles $\alpha_{o,out}$, $\alpha_{i,out}$ may be defined by the angle between the axial direction of the inlet 10 and/or the direction of the ingoing flow velocity $c_0$ and the trailing edge camber tangent of the guide vane 12. If the outer exit angle $\alpha_{o,out}$, is smaller than the inner exit angle $\alpha_{i,out}$ the outer tangential flow velocity component $c_{o,u}$ may be smaller than the inner tangential flow velocity component $c_{1,u}$.

In the example of Fig. 2A, the outer exit angle $\alpha_{o,out}$ is 25° and the inner exit angle $\alpha_{i,out}$ is 35°. The exit angle may change continuously along the radial direction from the inner contour 14i to the outer contour 14o. Hence, the tangential flow velocity component $c_u$ may continuously change along the radial direction of the inlet 10 to obtain a favorable distribution of the angular momentum of the flow upstream of the runner 11.

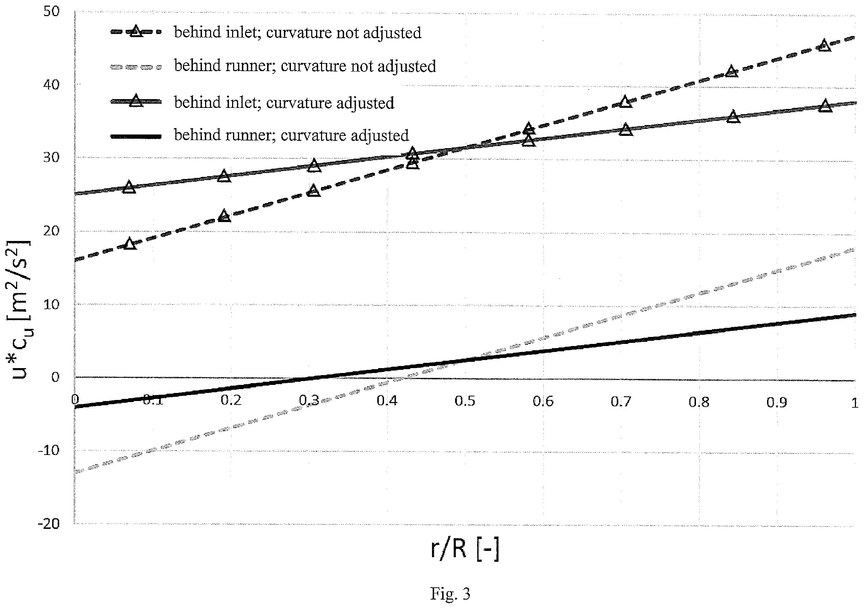

The effect of the guide vane design on the flow distribution can be seen from the exemplary values of the angular momentum as a function of the radial position in Fig. 3. The angular momentum may be given in values of the product $u * c_u$ of the tangential flow velocity component $c_u$ and the tangential runner velocity

$$u = \omega * r; \qquad\qquad (2)$$

wherein $\omega$ is the angular velocity of the runner and $r$ is the radius of the regarded velocities. The radial position $r/R$ is given by the radius $r$ normalized by the maximum radius $R$ at a radially outward position of the inlet 10 and/or runner 11 from the hub 22.

As can be seen from Fig. 3, if the curvature of the guide vanes 12 is adjusted (solid lines), the product $u * c_u$ has a smaller slope with respect to the radial position $r/R$ than in the case of non-adjusted curvature (dashed lines). Further, the product $u * c_u$ measured downstream of the runner 11 (lines without triangles) may have smaller absolute values. Therefore the flow downstream of the runner 11 may have less exit swirl, which may increase the efficiency of the turbine 8.

However, a second requirement for the guide vane 12, besides the preparation of the profile of the tangential flow velocity component $c_u$, may be that the shape of the guide vane 12 may allow a closing of the inlet 10 by rotating the guide vane 12 around a vane axis 26 such that the guide vane 12 continuously touches an adjacent guide vane protruding from the hub 22. The vane axis 26 may extend in a radial (vane) direction from the hub 22 and may pierce a surface spanned by the inner contour 14i and a surface spanned by the outer contour 14o.

A closable inlet 10 can block a flow through the turbine 8. If the inlet 10 can be closed in a continuous manner by rotating the guide vanes 12, a mass flow through the turbine 8 may be continuously changed. In particular, the rotatable guide vanes 12 may allow setting a turbine start condition, wherein the tangential flow velocity component $c_u$ is large while the mass flow through the turbine 8 is low. The turbine start condition may improve the start of the turbine 8 and may facilitate the synchronization of the generator of the turbine 8 with the grid.

In particular in the case of an axial turbine 8, a change of the guide vane curvature along the radial direction of the guide vane 12 may limit the range of rotation of the guide vane 12, such that the guide vane 12 may no longer touch an adjacent guide vane 12a if rotated into a maximally closed position of the inlet 10.

An example of an inlet 10 with guide vanes 12, 12a constructed from the inner and outer contours 14i, 14o shown in Fig. 2A is shown in Fig. 2B. The inlet 10 comprises guide vanes 12, 12a, which have an inner contour 14i that is more strongly curved than an outer contour 14o. The guide vanes 12 are arranged circumferentially around the hub 22 and protrude in a radial direction from the hub 22. Each guide vane 12 is rotatable around a vane axis 26, the vane axis 26 extending in a radial (vane) direction from the hub 22.

As can be seen in Fig. 2B, in a maximally closed position of the inlet 10, adjacent guide vanes 12 and 12a touch close to the hub 22, but a gap remains between the guide vanes 12, 12a farther from the hub 22. A flow through the inlet 10 may hence not be stopped by rotating the guide vanes 12, 12a into a maximally closed position.

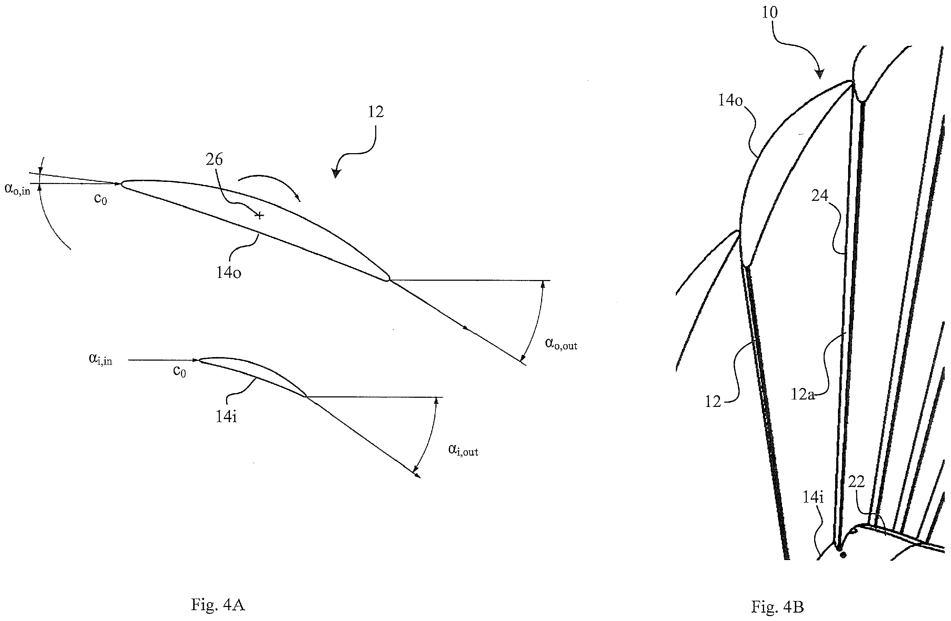

To allow a closing of the inlet 10, the guide vane 12 may be adjusted as shown in Fig. 4A. For purposes of illustration, the shape of the inner contour 14i and the outer contour 14o is identical to the shapes of the inner and outer contours 14i, 14o shown in Fig. 2A. However, with respect to the comparative example of Fig. 2A, the outer contour 14o is rotated around a twist axis 26 by a certain angle, such as in this case 6.6°, which results in a twisted guide vane. Hence, the modified contour may no longer have a leading edge camber tangent that is parallel to the ingoing flow $c_0$, but may have a finite angle $\alpha_{o,in}$, which in this case is $a_{o,in} = 6.6°$. In addition, the difference between the inner exit angle $\alpha_{i,out}$ and the outer exit angle $\alpha_{o,out}$ may be reduced.

Due to the twisted profile, the adjacent guide vanes 12, 12a in an inlet 10 may touch along a touching line 24 as shown in Fig. 4B. The touching line 24 may be, but does not have to be a straight line. Hence, the inlet 10 may be closed by rotating the guide vanes 12, 12a.

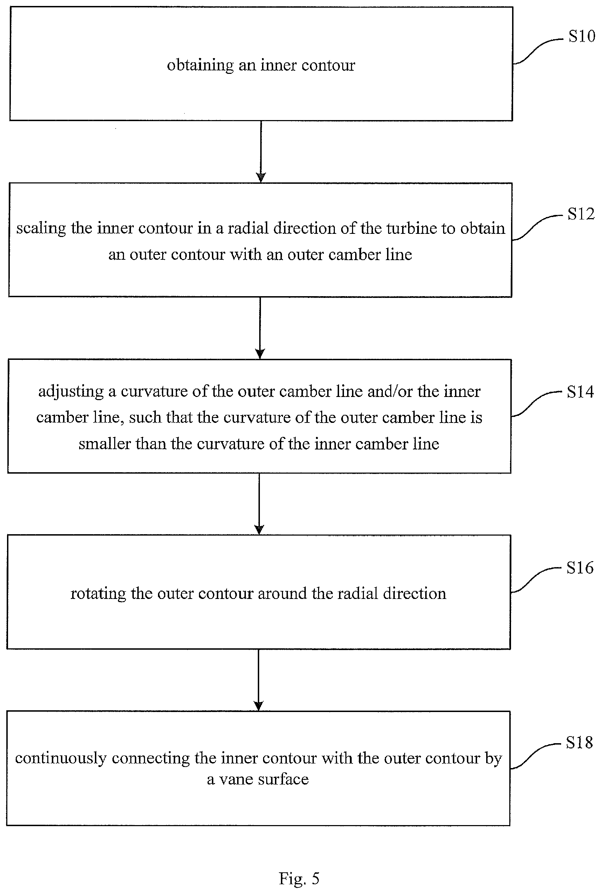

A method to construct a guide vane profile, which may allow closing of an inlet 10 and may produce a varying distribution of tangential flow velocities $c_u$ along a radial direction, such as the one shown in Figs. 4A, 4B, is shown in Fig. 5. The method comprises obtaining S10 an inner contour 14i, scaling S12 the inner contour 14i in a radial direction of the turbine 8 to obtain an outer contour 14o with an outer camber line 16o, adjusting S14 a curvature of the outer camber line 16o and/or the inner camber line 16i, such that the curvature of the outer camber line 16o is smaller than the curvature of the inner camber line 16i, rotating S16 the outer contour 14o around the radial direction, and (continuously) connecting S18 the inner contour 14i with the outer contour 14o by a vane surface.

The curvature of the guide vane 12 may modify the direction of an exit flow, which can be used to drive a runner 11 of a turbine 8. Adjusting the curvature may therefore allow preparing a tangential flow velocity $c_u$ for the runner 11.

Rotating the outer contour 14o around the radial direction, such as the vane (twist) axis 26, may allow the construction of a guide vane 12 with twisted contours 14i, 14o, which may allow a closing of the inlet 10 by rotating circumferentially arranged guide vanes 12 in the inlet 10.

Closable guide vanes 12 may have a finite intake angle $\alpha_{in}$ (such as the angle $\alpha_{o,in}$) between the leading edge camber tangent and the flow direction $c_0$. The finite intake angle $\alpha_{in}$ may however lead to losses due to an incidence angle of the flow at the leading edges 18o, 18i.

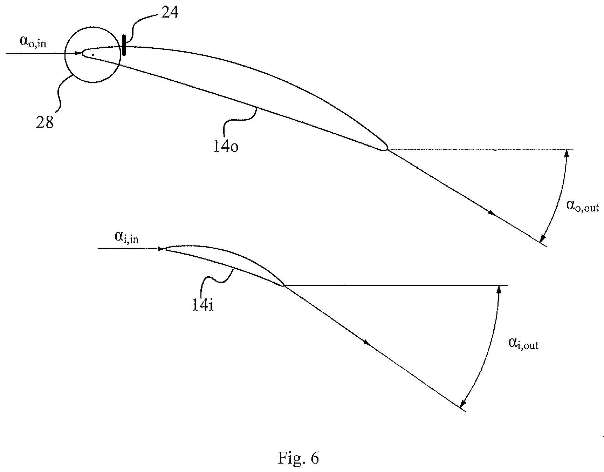

To reduce losses at the leading edges 18o, 18i of the guide vane 12, the nose 28 of the guide vane 12 may be adjusted as shown in Fig. 6. Adjusting the nose 28 of the profile may comprise identifying a position of the touching line 24 for the outer contour 14o. An adjustable nose 28 may be located farther from the central portion of the guide vane 12 than the touching line 24. Thus, an adjustment of the nose 28 may not influence the position of the touching line 24 and may not interfere with a closing of the inlet 10 by rotating the guide vanes 12, 12a.

The adjustment may be made by locally changing the form/curvature of the outer camber line 16o of the nose 28 of the outer contour 14o, such that the leading edge camber tangent of the outer contour 14o is parallel to the ingoing flow velocity $c_0$ in an open position of the inlet 10. Additionally, the thickness profile of the outer contour 14o may be adjusted, such that the change of the curvature of the outer contour 14o at the nose 28 or between the nose 28 and the central portion of the outer contour 14o is reduced, which may reduce losses in the flow.

By connecting the inner contour 14i to the outer contour 14o, an adjusted guide vane 12 may be provided, which features leading edge camber tangents 18o, 18i that may be substantially parallel, and that may in particular be substantially parallel to the ingoing flow $c_0$, along the radial extension of the guide vane 12 between the inner contour 14i and the adjusted outer contour 14o.

The guide vanes 12 of Figs. 2A, 2B, 4A, 4B and 6 have symmetric or mostly symmetric (e.g. in Fig. 6) contours 14i, 14o to improve the flow distribution through the turbine 8 in both axial directions. For example, when the turbine 8 is connected to a reservoir R, the turbine 8 may be used in a pumping mode to increase or decrease a level (such as a water level or pressure level) in the reservoir R at a high efficiency.

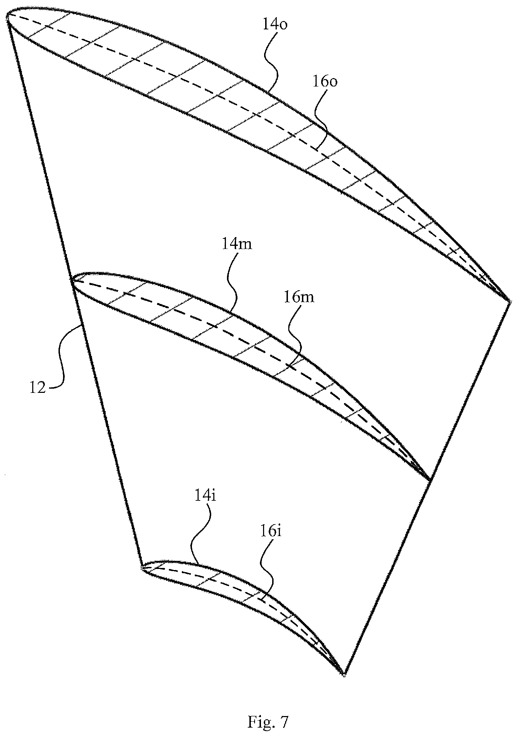

Fig. 7 shows an example of a guide vane 12 having asymmetric inner and outer contours 14i, 14o. Additionally, an intermediate middle contour 14m is shown, which may be obtained from the guide vane 12 at a middle position between the outer contour 14o and the inner contour 14i. The contours 14i, 14m, 14o may be NACA hydrofoils and comprise leading edges 18o, 18i with a smaller curvature than the curvature of the trailing edges 20o, 20i of the respective contours 14i, 14m, 14o.

The guide vane 12 in Fig. 7 also has a larger curvature at the inner contour 14i than at the outer contour 14o. In other words, the inner camber line 16i of the inner contour 14i comprises a central portion with a higher curvature than a corresponding central portion of the outer camber line 16o of the outer contour 14o.

The profile may further be adjusted and may comprise a twisted outer contour 14o, such that the guide vane 12 may be rotated to continuously touch an adjacent guide vane 12a in an inlet 10 and may thereby stop a flow through the inlet 10.

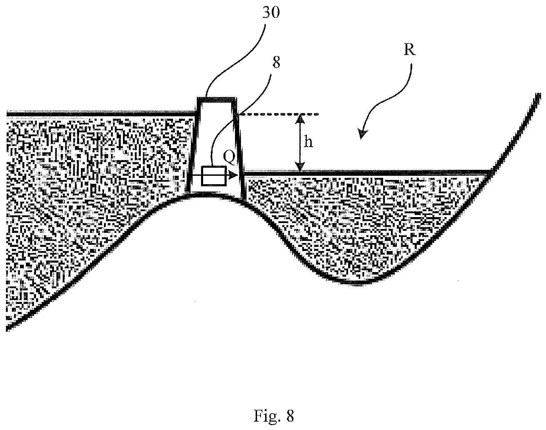

The guide vanes 12 described above may be used in an inlet 10 for an axial turbine 8 used to harvest tidal energy in a tidal power plant as illustrated in Fig. 8. The tidal power plant may comprise a turbine 8 arranged in a weir 30, which may control a flow Q from and to a reservoir R. In a tidal power plant, the energy may be harvested from energy stored in different water levels of a reservoir according to the tidal range h.

In one embodiment, the tidal range h at a location of a tidal power plant may be 5 m. In this case an axial turbine 8 with a Kaplan type runner 11 and the inlet 10 as described above may be used. With a diameter of the turbine of 5 m, the turbine 8 may achieve a unit speed of the runner of 175 rpm and a unit discharge of 2.25 $m^3$/s of the turbine 8 at a high efficiency working point. Hence, in the exemplary tidal power plant, the turbine 8 may have a flow Q of 126 $m^3$/s at an angular velocity of the runner of 78 rpm and transfers kinetic and potential energy of the flow to an angular momentum of the runner with high efficiency. The rotation of the runner 11 may be transmitted to a generator used to generate electric power. A plurality of turbines 8 can be used, if a higher water volume can be exploited for the generation of electrical power. Turning the axial turbine 8 around by 180°, may allow harvesting energy in the opposite flow (outflow) direction at the same efficiency. Additionally, turning the turbine 8 may be used to pump water into and out from the reservoir R at a higher efficiency to increase the overall power output of the tidal power plant.

However, while the embodiments have focused on an inlet 10 for a turbine 8 to harvest tidal power, the guide vane design may also be used in similar applications for turbines 8, in particular a barrage, and the applications obviously need not be constrained to harvest tidal power, but may also harvest energy from a flow of water at or close to a river or a water level difference in the vicinity of a weir 30 or barrage.

In some embodiments, the turbine 8 may be used in an energy storage mode using it to pump water with a surplus of energy into or out of a reservoir R and harvesting said surplus energy stored in the difference of water levels of the reservoir and the sea at a later point in time.

Additionally, the inlet 10 may also be used in turbines 8 for a compressible medium such as a gas, and the advantages and features of the described design may be implemented in a similar fashion.

Moreover, the description of the preferred embodiments and the Figures merely serve to illustrate the invention and the beneficial effects associated therewith, but should not be understood to imply any limitation. The scope of the invention is to be determined solely by the appended claims.

**List of reference signs**

8 turbine
10 inlet
11 runner
12 guide vane
12a adjacent guide vane
14i, 14m, 14o inner/middle/outer contour
16i, 16m, 16o inner/middle/outer camber line
18i, 18o leading edge of the inner/outer contour
20i, 20o trailing edge of the inner/outer contour
22 hub of the inlet
24 touching line between adjacent guide vanes 26 vane/twist axis
28 nose of the guide vane
30 weir
$c_0$ (axial) ingoing flow velocity
$c_1$ outgoing flow velocity
$c_u$ tangential flow velocity component
$c_a$ axial flow velocity component
$c_{1,u}$, $c_{1,a}$ tangential/axial flow component downstream of the inlet
$c_{o,1}$, $c_{i,1}$ flow velocity/direction downstream of the outer/inner contour
$c_{o,u}$, $c_{o,a}$ tangential/axial flow component downstream of the outer contour
$c_{i,u}$, $c_{i,a}$ tangential/axial flow component downstream of the inner contour
$\alpha_{o,in}$, $\alpha_{o,out}$ intake/exit angle of the outer contour
$\alpha_{i,in}$, $\alpha_{i,out}$ intake/exit angle of the inner contour
h tidal range
R reservoir
Q flow through turbine

**Claims**

1. An inlet (10) for an axial turbine (8) comprising a hub (22) and a plurality of rotatable guide vanes (12,12a) arranged circumferentially around the hub (22), the guide vanes (12,12a) each comprising an inner contour (14i) connected by a vane surface to an outer contour (14o) in a radial direction from the hub (22),
   wherein the outer contour (14o) is farther from the hub (22) than the inner contour (14i),
   wherein the inner contour (14i) comprises an inner camber line (16i) with an inner curvature, and the outer contour (14o) comprises an outer camber line (16o) with an outer curvature, the outer curvature being smaller than the inner curvature at least in a central portion of the outer contour (14o), and
   wherein the outer contour (14o) is twisted with respect to the inner contour (14i) to allow a closing of the inlet (10) when the guide vanes (12) are rotated.

2. The inlet (10) of claim 1, wherein an inner exit angle ($\alpha_{o,in}$) of the inner contour (14i) is larger than an outer exit angle $\alpha_{o,out}$) of the outer contour (14o).

3. The inlet (10) of claim 1 or 2, wherein the inner contour (14i) and/or the outer contour (14o) is symmetric with respect to a flow through the inlet (10).

4. The inlet (10) of claim 1 or 2, wherein the inner contour (14i) and/or the outer contour (14o) is non-symmetric with respect to a flow through the inlet (10).

5. The inlet (10) of any one of the preceding claims, wherein a leading edge camber tangent of the inner contour (14i) and a leading edge camber tangent of the outer contour (14o) are parallel at an intake side of the inlet (20).

6. The inlet (10) of any one of the preceding claims, wherein the outer curvature is smaller than the inner curvature over the full length of the outer camber line (16o) and the inner camber line (16i).

7. A turbine (8) comprising the inlet (10) of any one of the preceding claims, in particular an axial Kaplan turbine.

8. The turbine (8) of claim 7, wherein an intake diameter of the turbine (8) is equal to an exit diameter of the turbine (8).

9. The turbine (8) of claim 7 or 8 arranged to be rotatable about an axis perpendicular to an axial direction of the turbine (8).

10. A method for constructing a guide vane (12) for an inlet (10) of an axial turbine (8), comprising:

   obtaining an inner contour (14i),
   scaling the inner contour (14i) in a radial direction of the turbine (8) to obtain an outer contour (14o) with an outer camber line (16o),
   adjusting a curvature of the outer camber line (16o) and/or the inner camber line (16i), such that the curvature of the outer camber line (16o) is smaller than the curvature of the inner camber line (16i),
   rotating the outer contour (14o) around the radial direction, and
   connecting the inner contour (14i) with the outer contour (14o) by a vane surface.

11. The method of claim 10, wherein the inner contour (14i) is symmetric with respect to a flow through the inlet (10).

12. The method of claim 10, wherein the inner contour (14i) is non-symmetric with respect to a flow through the inlet (10).

13. The method of any one of claims 10 to 12, further comprising adjusting a nose (28) of the outer contour (14o) such that a leading edge camber tangent of the outer contour (14o) is parallel to a leading edge camber tangent of the inner contour (14i), or vice versa.

14. The method of any one of claims 10 to 13, wherein an inner exit angle ($\alpha_{o,in}$) of the inner contour (14i) is larger than an outer exit angle ($\alpha_{o,out}$) of the outer contour (14o).

15. The method of any one of claims 10 to 14, wherein the guide vane (12) connects with an adjacent guide vane (12a) in the inlet (10) when the guide vane (12) and the adjacent guide vane (12a) are each rotated around a substantially radial axis allowing for stopping a flow through the turbine (8).

Fig. 1

Fig. 2B

Fig. 2A

Fig. 3

EP 3 495 654 A1

Fig. 4B

Fig. 4A

14

| | |
|---|---|
| obtaining an inner contour | S10 |

↓

| | |
|---|---|
| scaling the inner contour in a radial direction of the turbine to obtain an outer contour with an outer camber line | S12 |

↓

| | |
|---|---|
| adjusting a curvature of the outer camber line and/or the inner camber line, such that the curvature of the outer camber line is smaller than the curvature of the inner camber line | S14 |

↓

| | |
|---|---|
| rotating the outer contour around the radial direction | S16 |

↓

| | |
|---|---|
| continuously connecting the inner contour with the outer contour by a vane surface | S18 |

Fig. 5

Fig. 6

14o

16o

14m

16m

12

14i

16i

Fig. 7

Fig. 8

Europäisches
Patentamt

European
Patent Office

Office européen
des brevets

# EUROPEAN SEARCH REPORT

Application Number

EP 17 20 5660

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | JP 2009 185731 A (TOSHIBA CORP)<br>20 August 2009 (2009-08-20)<br>* paragraphs [0051] - [0052] *<br>* paragraphs [0059] - [0060] *<br>* figures 1-14 * | 1,3-13,<br>15<br>2,14 | INV.<br>F03B3/04<br>F03B3/18<br>F03B13/26<br>F03B17/06 |
| A | EP 0 636 787 A1 (KSB AG [DE])<br>1 February 1995 (1995-02-01)<br>* abstract *<br>* figures 1-7 * | 8 | |
| A | EP 2 940 290 A1 (ALSTOM RENEWABLE TECHNOLOGIES [FR])<br>4 November 2015 (2015-11-04)<br>* abstract *<br>* figures 1-3 * | 1-15 | |
| A | DE 10 2009 023583 A1 (KUPPINGER KAI [DE]; RUOPP ANDREAS [DE])<br>24 February 2011 (2011-02-24)<br>* abstract *<br>* paragraph [0019] *<br>* figures 1-4 * | 1-15 | TECHNICAL FIELDS SEARCHED (IPC)<br><br>F03B |

The present search report has been drawn up for all claims

| Place of search | Date of completion of the search | Examiner |
|---|---|---|
| Munich | 13 April 2018 | Cabrele, Silvio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 17 20 5660

This annex lists the patent family members relating to the patent documents cited in the above-mentioned European search report.
The members are as contained in the European Patent Office EDP file on
The European Patent Office is in no way liable for these particulars which are merely given for the purpose of information.

13-04-2018

| Patent document cited in search report | | Publication date | Patent family member(s) | | Publication date |
|---|---|---|---|---|---|
| JP 2009185731 | A | 20-08-2009 | NONE | | |
| EP 0636787 | A1 | 01-02-1995 | DE | 4325231 A1 | 02-02-1995 |
| | | | EP | 0636787 A1 | 01-02-1995 |
| | | | JP | H07305676 A | 21-11-1995 |
| EP 2940290 | A1 | 04-11-2015 | CN | 106232983 A | 14-12-2016 |
| | | | EP | 2940290 A1 | 04-11-2015 |
| | | | WO | 2015165648 A1 | 05-11-2015 |
| DE 102009023583 | A1 | 24-02-2011 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017153540 A1

- US 6007297 A

**Non-patent literature cited in the description**

- **SEDLACEK et al.** *Hydropower & Dams,* 2017